# EUROPÄISCHE PATENTSCHRIFT

(11) **EP 2 022 654 B1**
(45) Veröffentlichungstag und Bekanntmachung des Hinweises auf die Patenterteilung: **24.11.2010**
(21) Anmeldenummer: 08161147.7
(22) Anmeldetag: 25.07.2008
(51) Int. Cl.: B60D 1/30, B60T 7/20, B60T 8/17, B60T 8/1755, B60T 13/08

(54) **Zusatzbremssystem und Verfahren zur Betätigung von Fahrzeugbremsen**
Additional braking system and method for actuating vehicle brakes
Système de frein supplémentaire et procédé d'actionnement de freins de véhicule

(30) Priorität: 06.08.2007 DE 102007036908; 26.10.2007 DE 102007051304
(43) Veröffentlichungstag der Anmeldung: 11.02.2009
(73) Patentinhaber: BPW Fahrzeugtechnik GmbH & Co. KG, 33104 Paderborn (DE); Reich GmbH Regel- und Sicherheitstechnik, 35713 Eschenburg-Wissenbach (DE)
(72) Erfinder: Joachim, Michael, 33129 Delbrück (DE); Manz, Stefan, 51588 Nümbrecht (DE); Müller, Matthias, 51105 Köln (DE); Schneider, Peter, 51597 Morsbach (DE); Bender, Steffen, 35713 Eschenburg (DE)
(74) Vertreter: Christophersen, Ulrich Rudolf

(56) Entgegenhaltungen:
- EP-B- 1 598 249
- WO-A-2004/041612
- DE-A1- 3 600 708
- DE-A1- 10 225 120
- JP-A- 2006 111 179

## Beschreibung

Die Erfindung betrifft ein Zusatzbremssystem für gebremste, insbesondere auflaufgebremste, Anhängerfahrzeuge mit einem die Fahrzeugbremse betätigenden Element, einem einen Schlingerwert des Fahrzeugs aufnehmenden Sensorelement und einer Überwachungseinheit, über die das Betätigungselement bei Erreichen eines kritischen Schlingerwerts zur Betätigung der Fahrzeugbremse veranlasst wird. Darüber hinaus betrifft die Erfindung ein Verfahren zur Betätigung von Fahrzeugbremsen über ein Zusatzbremssystem, bei dem die Schlingerwerte des Fahrzeugs überwacht werden und die Fahrzeugbremse bei Erreichen eines kritischen Schlingerwerts betätigt wird.

WO 2004/041612 A1 offenbart ein Verfahren und eine Einrichtung zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden. Um einen fahrstabilisierenden Eingriff an dem Zugfahrzeug rechtzeitig ausführen zu können und Fehlanregungen zu vermeiden ist vorgesehen, dass die Gierwinkelgeschwindigkeit erfasst und die fahrstabilisierenden Maßnahmen in Abhängigkeit von Daten gesteuert werden, die mindestens aus dem Verlauf der Gierwinkelgeschwindigkeit gewonnen und nach Kriterien ausgewertet werden, die auf ein instabiles Fahrverhalten hinweisen.

Derartige Zusatzbremssysteme und Verfahren zur Bremsbetätigung sind vor allem für auflaufgebremste Anhängerfahrzeuge bekannt. Bei solchen Anhängerfahrzeugen ist üblicherweise im Bereich der Zugdeichsel eine Auflaufbremseinrichtung angeordnet, bei der der hintere Teil gegenüber dem vorderen Teil verschiebbar ist. Beim Abbremsen des Zugfahrzeugs verschiebt sich der hintere Teil gegenüber dem vorderen Teil in Fahrtrichtung, wodurch die Auflaufbremseinrichtung vorübergehend kürzer wird und das Anhängerfahrzeug auf das Zugfahrzeug aufläuft. Diese Relativbewegung wird zur Betätigung der Bremse des Anhängerfahrzeugs genutzt, wozu ein die Relativbewegung von der Deichsel zur Bremse übertragendes Bremsgestänge vorgesehen ist.

Während der Fahrt können allerdings auch solche Situationen auftreten, in denen ein Abbremsen des Anhängerfahrzeugs erforderlich ist, ohne dass auch das Zugfahrzeug abgebremst wird. Eine solche Anhängerfahrzeugbremsung ist etwa erforderlich, wenn das Anhängerfahrzeug ins Schlingern gerät, d.h. periodisch Querbewegungen quer zur Fahrtrichtung auftreten. Zur Unterdrückung von Schlingerbewegungen sind auflaufgebremste Fahrzeuge daher mit einem zusätzlichen Bremssystem versehen, das sich unabhängig von der Bremse des Zugfahrzeugs betätigen lässt.

Da sich die Schlingerbewegungen aufschaukeln und zu gefährlichen Fahrsituationen führen können, wird bei Erreichen eines kritischen Schlingerwerts, bei dem ein weiteres Aufschaukeln und damit eine gefahrenträchtige Fahrsituation wahrscheinlich ist, die Bremse des Anhängerfahrzeugs durch das Zusatzbremssystem betätigt. Hierdurch wird der Fahrzeugverbund aus Zugfahrzeug und Anhängerfahrzeug quasi in die Länge gezogen und die Schlingerbewegungen des Anhängerfahrzeugs unterdrückt. Die Zusatzbremssysteme sind mit einem Betätigungselement zum Zuspannen der vorhandenen Fahrzeugbremse, einem die Schlingerbewegungen anhand eines Schlingerkennwerts erkennenden Sensor und einer die sensierten Schlingerwerte auswertenden Überwachungseinheit versehen. Bei Erreichen des kritischen Schlingerwerts wird das Betätigungselement zur Betätigung der Fahrzeugbremse veranlasst, wonach die Bremse zugespannt und das Anhängerfahrzeug verzögert wird.

Bei solchen Zusatzbremssystemen haben sich die vergleichsweise langen Ansprechzeiten als nachteilig erwiesen. Zwischen dem Zeitpunkt, in dem das Betätigungselement zur Betätigung der Fahrzeugbremse veranlasst wird und der tatsächlichen Verzögerung des Anhängerfahrzeugs liegt eine zeitliche Differenz, in welcher die Schlingerwerte noch weiter ansteigen können, wodurch die gefährliche Fahrsituation nicht effektiv verhindert werden kann.

Der Erfindung liegt die **Aufgabe** zugrunde, die Ansprechzeit eines Zusatzbremssystems für Fahrzeugbremsen zu reduzieren und ein Verfahren zur Betätigung von Fahrzeugbremsen über Zusatzbremssysteme anzugeben, das sich durch kurze Ansprechzeiten auszeichnet.

Bei einem Zusatzbremssystem der eingangs genannten Art wird diese Aufgabe dadurch **gelöst,** dass bei Erreichen einer unterhalb des kritischen Schlingerwerts liegenden Schwelle des Schlingenwerts die Fahrzeugbremse dadurch in Alarmbereitschaft versetzbar ist, dass der Leerhub der Fahrzeugbremse überwunden wird.

Durch vorzeitiges Überwinden des Leerhubs, der sich aus dem Spiel des Bremsgestänges und dem an der Fahrzeugbremse eingestellten Lüftspiel zwischen den Reibbelägen und der Bremstrommel oder Bremsscheibe zusammensetzt, wird die Bremse vorsorglich in Alarmbereitschaft gebracht, so dass anschließend bei einem weiteren Anstieg der Schlingerwerte bis hin zu dem voreingestellten kritischen Schlingerwert eine Bremszuspannung ohne nennenswerte Zeitverzögerung erfolgen kann. Es ist nicht erforderlich, dass zunächst der Leerhub überwunden wird. Hierdurch ergeben sich sehr rasche Ansprechzeiten.

Von Vorteil ist eine Ausgestaltung, bei der die Überwachungseinheit nach Überwindung des Leerhubs in Abhängigkeit des Schlingerwerts entscheidet, ob die Fahrzeugbremse betätigt oder in ihre Ausgangsstellung zurückversetzt wird. Bei Erreichen des Schlingerschwellenwerts besteht eine gewisse Wahrscheinlichkeit, dass die Schlingerbewegungen auf ein kritisches Niveau ansteigen, jedoch ist dies nicht immer der Fall, weshalb in solchen Fällen, in denen die Schlingerwerte nicht weiter ansteigen, die Fahrzeugbremse bzw. das Betätigungselement in ihre Ausgangsstellung zurückversetzt werden. Damit wird erreicht, dass sich die Fahrzeugbremse nur bei drohender Schlinger-Gefahr in Alarmbereitschaft befindet.

In vorteilhafter Ausgestaltung wird die Entscheidung anhand der Frequenz und/oder Amplitude der Schlingerwerte innerhalb eines Entscheidungszeitraumes getroffen da sich anhand der Frequenz und/oder der Amplitude die weitere Entwicklung der Schlingerwerte abschätzen lassen.

Von Vorteil ist eine Ausgestaltung, bei der das Sensorelement innerhalb eines Gehäuses der Zusatzbremse angebracht ist. Es ergibt sich eine kompakte Bauweise des Zusatzbremssystems.

Alternativ ist es auch möglich, dass das Sensorelement außerhalb des Gehäuses nahe der Fahrzeugachse angebracht ist. Hierdurch lassen sich die Querbeschleunigungen sehr genau erfassen, beispielsweise können Verwindungen der Fahrzeugkarosserie die Messwerte nicht verfälschen.

Bei einem Verfahren der eingangs beschriebenen Art wird zur **Lösung** der Aufgabe vorgeschlagen, dass die Fahrzeugbremse vor Erreichen des kritischen Schlingerwerts dadurch in Alarmbereitschaft versetzt wird, dass der Leerhub der Fahrzeugbremse überwunden wird.

Beim Zuspannen der Bremse ist es nicht erforderlich, dass zunächst der Leerhub überwunden wird. Vielmehr führt die Alarmbereitschaft zu einer raschen Fahrzeugverzögerung bei Erreichen des kritischen Schlingerwerts.

Bei diesem Verfahren ist es von Vorteil, wenn die Fahrzeugbremse bei Erreichen einer Schwelle des Schlingerwerts in Alarmbereitschaft gebracht wird. Dieser Schwellenwert kann voreingestellt werden. Bei Erreichen des Schwellenwerts besteht eine überwiegende Wahrscheinlichkeit, dass die Schlingerwerte weiter ansteigen und auch ein kritisches Niveau erreichen.

Schließlich wird in weiterer Ausgestaltung des Verfahrens vorgeschlagen, dass die in Alarmbereitschaft versetzte Fahrzeugbremse in ihren Ausgangszustand zurückversetzt wird, sofern innerhalb eines bestimmten Zeitintervalls der kritische Schlingerwert nicht erreicht wird. Nach Ablauf des vorbestimmten Zeitintervalls wird die Fahrzeugbremse in ihren Ausgangszustand zurückversetzt, so dass diese nicht während der gesamten Fahrtzeit in Alarmbereitschaft herumfährt.

Weitere Einzelheiten und Vorteile eines erfindungsgemäßen Zusatzbremssystems sowie eines Verfahrens zur Betätigung von Fahrzeugbremsen über ein Zusatzbremssystem werden nachfolgend anhand eines in den Figuren dargestellten Ausführungsbeispiels erläutert. Darin zeigen:
- Figur 1: eine perspektivische Ansicht einer Zugdeichsel eines auflaufgebremsten Anhängerfahrzeugs mit Zusatzbremssystem,
- Figur 2: eine weitere Ansicht der Zugdeichsel aus Figur 1,
- Figur 3: eine perspektivische Ansicht einer Zugdeichsel unter Weglassung eines Abdeckelements,
- Figur 4: in schematischer Ansicht eine Draufsicht auf Teile eines auflaufgebremsten Anhängerfahrzeugs,
- Figur 5: eine perspektivische Ansicht eines Zusatzbremssystems von der einen Seite her betrachtet,
- Figur 6: eine perspektivische Ansicht eines Zusatzbremssystems von der anderen Seite her betrachtet,
- Figuren 7 bis 11: perspektivische Ansichten eines Zusatzbremssystems bei geöffnetem Gehäuse in verschiedenen Montagestadien und
- Figur 12: die Darstellung eines zeitlichen Schlingerverlaufs eines Anhängerfahrzeugs.

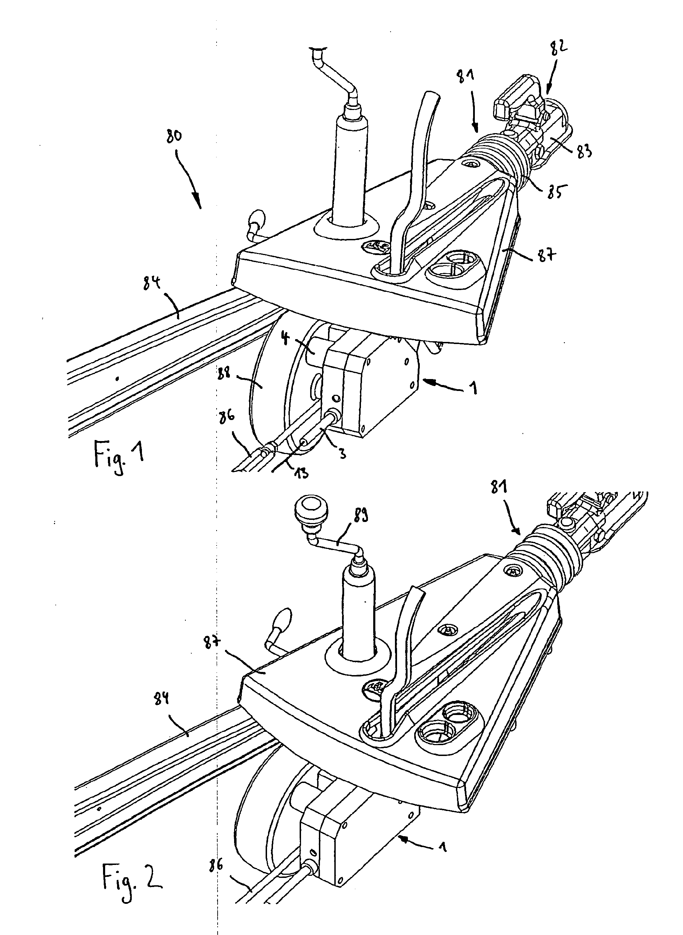

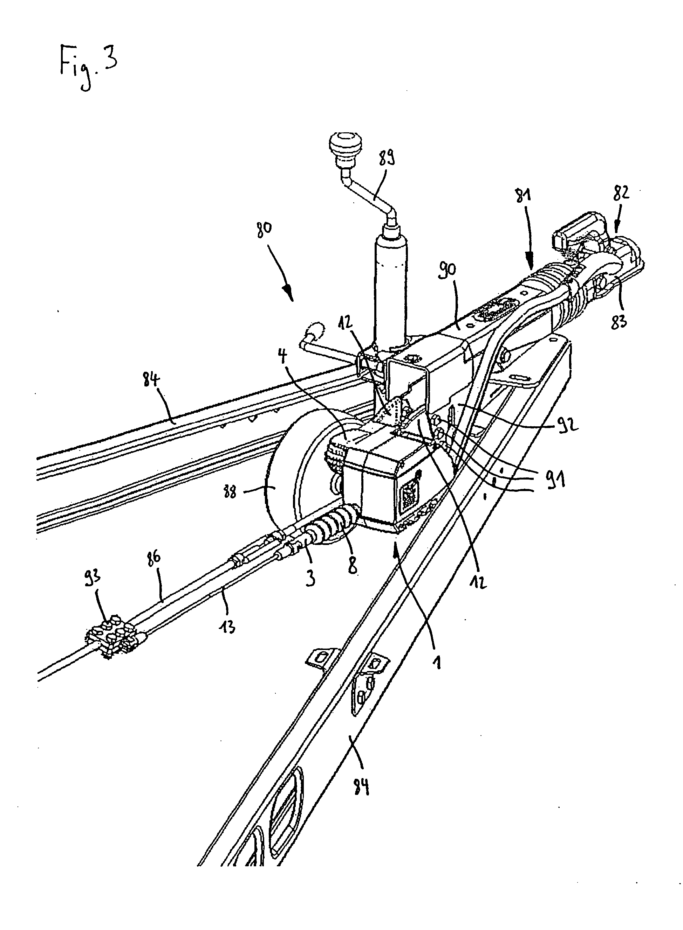

In den Figuren 1 und 2 dargestellt ist in perspektivischer Ansicht das vordere Ende einer Zugdeichsel 80 eines auflaufgebremsten Anhängerfahrzeugs mit einem Zusatzbremssystem 1. Die Auflaufbremseinrichtung 81 befindet sich an einer mit einer Kupplungseinrichtung 82 versehenen Zugstange 83. Die Zugstange 83 ist gegenüber dem hinteren Zugdeichselteil, der aus zwei triangelförmig aufeinander zu laufenden Holmen 84 besteht, verschiebbar. Von den Holmen 84 ist in den Figuren 1 und 2 nur der linke dargestellt. Ein zweiter Fahrzeugholm 84, der sich symmetrisch zur Fahrzeugmittelachse auf der anderen Seite der Zugdeichsel 80 erstreckt, wurde in den Figuren 1 und 2 aus Gründen der Übersicht nicht dargestellt, vgl. auch Figur 3.

Das Anhängerfahrzeug wird über die vorne an der Zugdeichsel 80 vorgesehene Kupplungseinrichtung 82 an einer Anhängerkupplung eines Zugfahrzeugs angekuppelt. Wenn das Zugfahrzeug abgebremst wird, verschiebt sich im Bereich der Auflaufbremseinrichtung 81 die Zugdeichsel aufgrund der Massenträgheit des Anhängerfahrzeugs gegenüber der Zugstange 83. Diese Relativbewegung wird von der Auflaufbremseinrichtung 81, von der nur ein die innen liegenden Komponenten der Auflaufbremse vor Verunreinigungen schützender Balg 85 zu erkennen ist, über ein Bremsgestänge 86 in den mit den Fahrzeugbremsen versehenen Achsenbereich des Anhängerfahrzeugs weitergeleitet und dort zur Bremsbetätigung genutzt. Diese Bremsbetätigung des Anhängerfahrzeugs erfolgt entsprechend der Bremsverzögerung des Zugfahrzeugs.

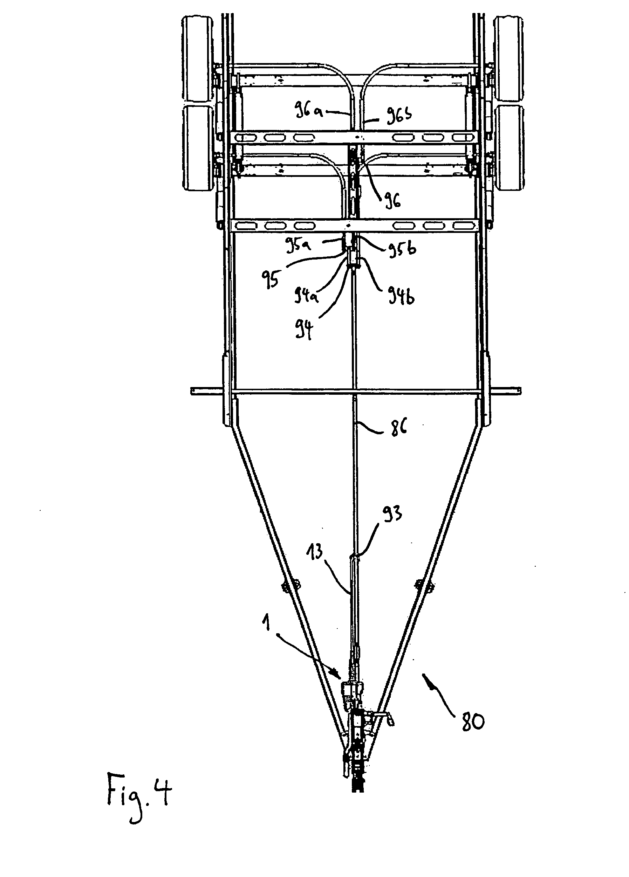

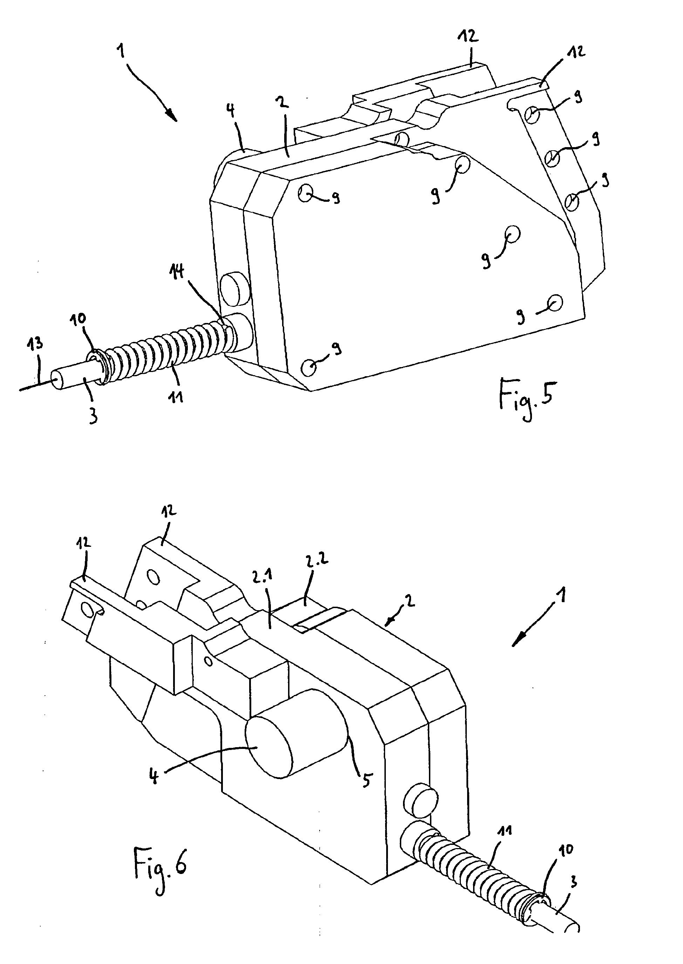

In den Figuren 3 und 4 ist das vordere Ende der Zugdeichsel 80 ohne die in den Figuren 1 und 2 dargestellte Abdeckung 87 dargestellt. Wie sich der Darstellung in Fig. 3 entnehmen lässt, befindet sich unterhalb der Abdeckung 87 das Auflaufbremsgehäuse 90 der Auflaufbremseinrichtung 81. Das Auflaufbremsgehäuse 90 wird gebildet von einem im Querschnitt in etwa U-förmigen Blechprofil. Am hinteren Ende des Auflaufbremsgehäuses 90 ist das Zusatzbremssystem 1 an diesem festgelegt. Das Gehäuse des Zusatzbremssystems 1 weist in Fahrtrichtung betrachtet zwei parallel zueinander ausgerichtete Flansche 12 mit beim Ausführungsbeispiel jeweils drei durchgängigen Montagebohrungen 9 auf, vgl. auch Fig.5. Die Flansche 12 sind von fahrzeughinten her in das Profil des Auflaufbremsgehäuses 90 bzw. in das Profil eines unterhalb des Auflaufbremsgehäuses 90 angeordneten Gehäuses 92, in dem ein Umlenkhebel für das Bremsgestänge 86 untergebracht ist, hinein geschoben und über drei sich quer zur Fahrtrichtung durch die am Flansch 12 vorgesehenen Bohrungen 9 erstreckende Montagebolzen 91 mit diesem verbunden.

Aufgrund dieser Befestigung eignet sich das Zusatzbremssystem 1 auch als Nachrüstlösung für bereits im Betrieb befindliche Anhängerfahrzeuge. Hierzu müssen lediglich auf beiden Seiten des Gehäuses 92 jeweils drei Bohrungen in dieses eingebracht werden. Danach kann das Zusatzbremssystem 1 in das Gehäuse 92 eingeschoben und durch Verschraubungen 91 sicher an diesem festgelegt werden. Das Gehäuse 92 muss nicht, wie in Fig. 3 dargestellt, zweistückig zu dem Auflaufbremsgehäuse 90 ausgeführt sein. Ebenso ist es möglich, das Auflaufbremsgehäuse 90 und das Gehäuse 92 durch eine Verlängerung der Schenkel des U-Profils des Auflaufbremsgehäuses 90 einstückig miteinander auszubilden. Auch die das Stützrad 88 tragende Kurbel 89 ist seitlich an das Auflaufbremsgehäuse 90 angeflanscht. Von daher ist es möglich, dass der Hersteller der Auflaufbremseinrichtung 81 diese mit einem Zusatzbremssystem 1 und/oder der Kurbel 89 als vormontierte Einheit ausstattet und der Fahrzeugbauer, beispielsweise ein Hersteller von Wohnanhängern, diese Elemente nicht separat zu montieren braucht, wodurch sich eine Montagevereinfachung für den Fahrzeugbauer ergibt.

Neben der Festlegung des Zusatzbremssystems 1 am Auflaufbremsgehäuse 90 bzw. am Gehäuse 92 ist in Fig. 3 auch die Kopplung des über das Zusatzbremssystem 1 bewegbaren Seilzugs 13 am Bremsgestänge 86 der Auflaufbremse dargestellt. Der Seilzug 13 verläuft parallel zum Bremsgestänge 86 und ist über ein klemmenartiges Montageelement 93 an diesem festgelegt.

Wie sich der ein zweiachsiges Anhängerfahrzeug darstellenden Fig. 4 entnehmen lässt, befindet sich das Montageelement 93 in Fahrzeugrichtung betrachtet vor der ersten Ausgleichswaage 94. Bei der Ausgleichswaage 94 handelt es sich um eine Art Wippe, die die am Bremsgestänge 86 anliegende Zugkraft auf zwei Zweige 94a, 94b verteilt. Der eine Zweig 94a dient zur Betätigung der Bremsen der vorderen Achse des Doppelachsaggregats. Hierzu ist auch der Zweig 94a mit einer Ausgleichswaage 95 versehen, über die sich die Zugkraft auf zwei Zweige 95a, 95b verteilt, die jeweils einer Fahrzeugbremse der vorderen Achse zugeordnet sind. Zur Betätigung der Bremsen der hinteren Fahrzeugachse ist der Zweig 94b vorgesehen. Auch dieser verzweigt sich über eine Ausgleichswaage 96 in zwei weitere Zweige 96a, 96b, über welche die Betätigung der rechten und linken Bremse der hinteren Fahrzeugachse erfolgt. Der Seilzug 13 ist vorzugsweise vor der ersten Ausgleichswaage 94 über das Montageelement 93 mit dem Bremsgestänge 86 gekoppelt.

Einzelheiten des Zusatzbremssystems werden nachfolgend unter Zuhilfenahme der Figuren 5 bis 11 erläutert.

Wie die Darstellungen in den Figuren 5 und 6 erkennen lassen, weist das Zusatzbremssystem 1 ein aus zwei Gehäusehälften 2.1, 2.2 zusammengesetztes Gehäuse 2 auf, aus dem eine Betätigungsstange 3 axial verschiebbar nach fahrzeughinten herausgeführt ist. Am aus dem Gehäuse 2 ragenden Ende der Stange 3 ist ein Seilzug 13 schematisch angedeutet, über den das Zusatzbremssystem 1 unter flachem Winkel am Bremsgestänge 86 angreift, vgl. auch Fig. 3.

Aus einer Öffnung 5 der Gehäusehälfte 2.1 ragt ein Betätigungselement 4 heraus, bei dem es sich um einen Elektromotor handelt. Im vorderen Bereich des Zusatzbremssystems 1 sind zwei Flansche 12 mit Montagebohrungen 9 zum Festlegen des Zusatzbremssystems 1 gegenüber der Deichsel vorgesehen. Darüber hinaus sind weitere Bohrungen 9 vorgesehen, über die die Hälften 2.1 und 2.2 des Gehäuses 2 gegeneinander verschraubt werden.

Am hinteren Ende des Gehäuses 2 ist die Stange 3 aus einer Öffnung 14 aus dem Gehäuse 2 herausgeführt. Zwischen einem an der Stange 3 festgelegten Ring 10 und dem Gehäuse 2 bzw. der Öffnung 14 ist eine Feder 11 vorgesehen, die die Stange 3 in Richtung der dargestellten Ausgangsstellung, d.h. nach hinten, drückt. Ebenfalls zwischen dem Ring 10 und der Öffnung 14 ist ein Faltenbelag 8 angeordnet, der das Gehäuseinnere und die Feder 11 vor Verunreinigungen, etwa Staub oder Schmutzwasser schützt, vgl. Fig. 3.

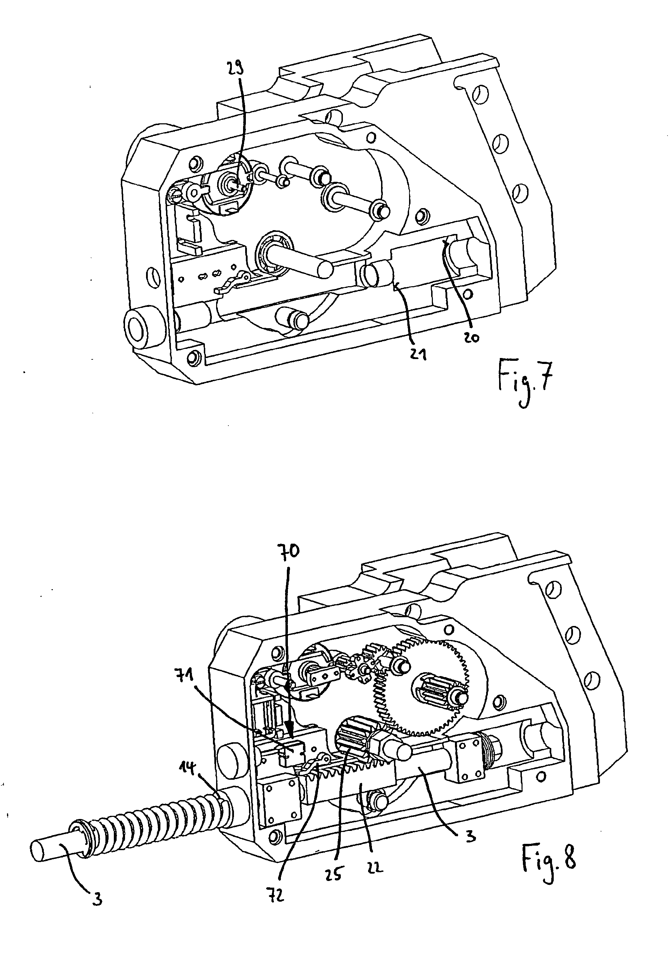

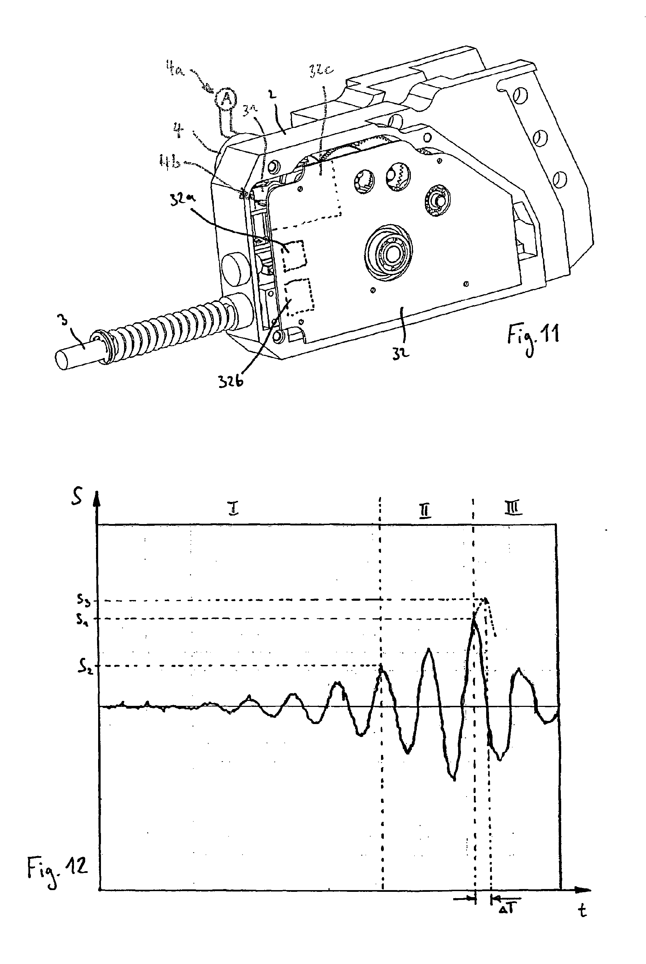

Einzelheiten des inneren Aufbaus des Zusatzbremssystems 1 lassen sich den Darstellungen in den Figuren 7 bis 11 entnehmen, die verschiedene Montagestadien des Zusatzbremssystems zeigen. In Figur 7 dargestellt ist ein Montagestadium, bei dem noch relativ wenige Bauteile montiert sind, wobei in Figur 11 alle wesentlichen Bauteile montiert sind.

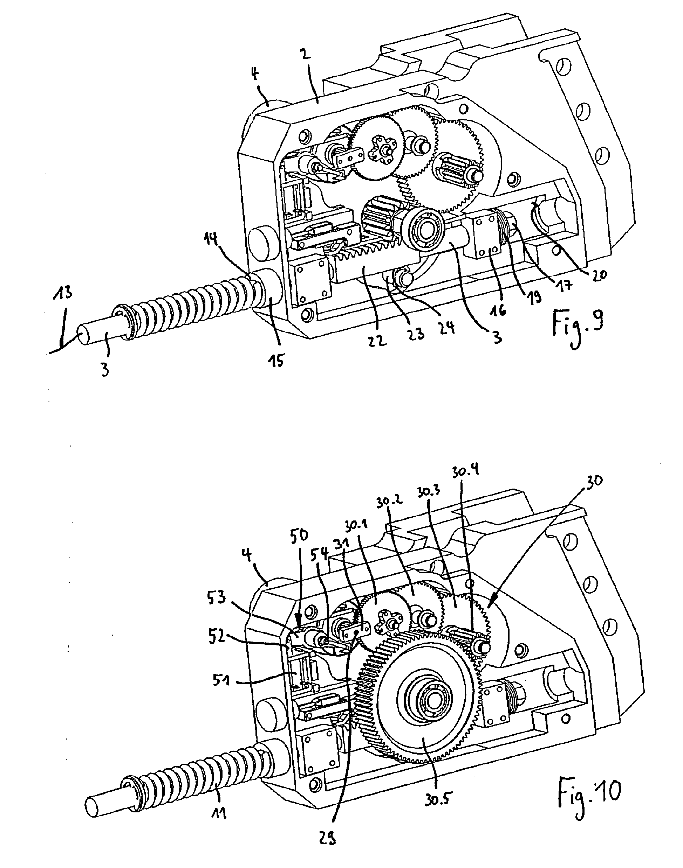

Einzelheiten der Funktionsweise des Zusatzbremssystems 1 werden nachfolgend zunächst unter Zuhilfenahme der Figur 9 erläutert.

Wie sich der Darstellung in Figur 9 entnehmen lässt, ist die Stange 3 über eine Hülse 15, z. B. eine Gleitlagerhülse, in das Gehäuseinnere hineingeführt. Die Stange 3 weist fest eine Zahnstange 22 auf, die sich über einen gewissen Längsbereich der Stange 3 erstreckt. Dahinter ist die Stange 3 durch ein weiteres, beim Ausführungsbeispiel als Gleitlager 16 ausgeführtes Lager geführt. Die Stange 3 weist an ihrem Ende einen Gewindeabschnitt für eine Mutter 17 auf. Zwischen der Mutter 17 und einem an der Stange 3 ausgebildeten Absatz ist eine Vielzahl von Tellerfedern 19 über die Mutter 17 klemmend gehalten. Das auf diese Weise auf der Zugstange 3 gehaltene Paket von Tellerfedern 19 bildet eine radiale Erweiterung der Zugstange 3, die zwischen zwei axialen Anschlagflächen 20 und 21 des Gehäuses 2 hin und her bewegbar ist, vgl. auch Fig. 7. In den Figuren dargestellt ist die Ausgangsstellung des Zusatzbremssystems 1, in der die Tellerfedern 19 an der vorderen Anschlagfläche 21 anliegen. In dieser Stellung ist die Stange 3 maximal aus dem Gehäuse 2 herausbewegt. Die Tellerfedern 19 dienen zur Dämpfung der Anschlagbewegung.

Über den als Bremsbetätigungselement dienenden Elektromotor 4 kann die mit dem Bremsgestänge 86 gekoppelte Zugstange 3 weiter in das Gehäuseinnere hineinbewegt werden, wodurch über den Seilzug 13 an dem Bremsgestänge 86 gezogen und die Bremse betätigt wird, vgl. auch Figuren 3, 4.

Wie die Darstellung in Fig. 10 erkennen lässt, ist der Elektromotor 4 über ein Getriebe 30, bestehend aus einer Vielzahl von Zahnrädern 30.1 bis 30.5, mit der Zahnstange 22 über ein Ritzel 25 (vgl. Fig. 8) gekoppelt, wodurch die Drehungen der Motorwelle 29 des Elektromotors 4 in eine translatorische Bewegung der Stange 3 überführt werden. Bei dem Getriebe 30 handelt es sich um ein Getriebe mit einer Kraftübersetzung bzw. Weguntersetzung, beim Ausführungsbeispiel mit einem Verhältnis von 1 : 447, so dass ein vergleichsweise schwacher Elektromotor 4 als Betätigungselement ausreicht.

Unter dem Ritzel 25 kämmt die Zahnstange 22. Diese ist nach unten hin über ein Gleitlager 23 abgestützt, das über einen Ring 24 an einem Gehäusezapfen gehalten wird.

Bei Betätigung des Zusatzbremssystems 1 infolge einer erkannten Schlingerbewegung wird zunächst der Elektromotor 4 bestromt, wodurch dessen Drehungen über das Getriebe 30 auf den Zahnstangenabschnitt 22 der Zugstange 3 übertragen werden. Die Zugstange 3 wird in das Gehäuse 2 hinein bewegt und das Bremsgestänge über den Seilzug 13 mit einer Zugkraft beaufschlagt, die zum Zuspannen der Bremse führt. Diese Zuspannkraft ist geringer als die bei Betätigung der Auflaufeinrichtung erreichbaren Zuspannkräfte, jedoch zur Unterdrückung von Schlingerbewegungen ausreichend. Die Bremskraft bzw. Bremsstellung wird eine gewisse Zeit lang aufrecht gehalten, bis die Schlingerbewegungen des Anhängerfahrzeugs abgeklungen sind und sich die Schlingerwerte des Anhängerfahrzeugs wieder auf normale Werte eingependelt haben. Zur Aufrechterhaltung der Bremsstellung kann der Elektromotor 4 die entsprechende Haltekraft aufbringen. Alternativ oder zusätzlich ist es zur Entlastung des Elektromotors 4 möglich, eine Haltevorrichtung 50 (vgl. Fig. 10) zum Halten der Motorwelle 29 (vgl. Figur 7) vorzusehen, die ein Verdrehen der Motorwelle 29 aus der Bremsstellung blockiert.

Einzelheiten der Haltevorrichtung 50 werden nachfolgend unter Bezugnahme auf Figur 10 erläutert. Die Haltevorrichtung 50 ist seitlich neben der Motorwelle 29 angeordnet und setzt sich zusammen aus einem Elektromagneten 51, über den ein Stift 52 bewegbar ist. Der Stift 52 ist an seinem freien Ende geschlitzt und dient zur Aufnahme des einen Endes einer über eine Achse 54 schwenkbar am Gehäuse 2 angelenkten Wippe 53. Bei Bestromung des Elektromagneten 51 verschiebt sich der Stift 52 in axialer Richtung, wodurch das eine Ende der Wippe 53 gemeinsam mit dem Stift 52 bewegt wird. Das andere Ende der Wippe schwenkt aufgrund der Anlenkung um die Achse 54 aus und blockiert über einen an der Motorwelle befestigten Drehgeber 31 ein Verdrehen der Motorwelle. Nach abgeschlossener Bremsung wird die Stromversorgung des Elektromagneten 51 unterbrochen, so dass der Bolzen 52 in seine Ausgangslage zurückbewegt und die Motorwelle 29 wieder freigegeben wird und das Zusatzbremssystem über die Feder 11 wieder in die Ausgangsstellung versetzt wird. Dies wird durch den selbsthemmungsfreien Aufbau des Getriebes ermöglicht bzw. zugelassen.

Als Feder 11 kommen nicht nur Spiralfedern in Betracht. Denkbar sind alle möglichen Arten von Kraftspeichern, etwa Gasfederen, Gummifedern, usw.

In dem Gehäuse 2 des Zusatzbremssystems 1 ist, wie Fig. 8 erkennen lässt, darüber hinaus eine Positionserkennung 70, bestehend aus einem Tastschalter 71 und einer weiteren Wippe 72, vorgesehen, welche die in Figur 8 dargestellte Ausgangsstellung der Zugstange 3 erkennt. Wenn die Zahnstange 22 sich nämlich in Richtung der Gehäuseöffnung 14 bewegt, beginnt die Wippe 72 zu schwenken und betätigt den Tastschalter 71. Das auf diese Weise gewonnene elektrische Signal dient der Erkennung der Endposition.

Schlingerbewegungen werden anhand bestimmter Schlingerwerte, die auf Bewegungen des Anhängers quer zur Fahrtrichtung deuten, erkannt. Zur Sensierung der Querbewegungen des Anhängerfahrzeugs können verschiedene Schlingerwerte erfasst werden. Als Schlingerwerte können beispielsweise die Querbeschleunigungen des Anhängerfahrzeugs über einen entsprechenden Beschleunigungssensor erfasst werden. Auch ist es möglich, die Schlingerbewegungen des Anhängerfahrzeugs anhand der beim Schlingern auftretenden Radgeschwindigkeitsdifferenzen der Räder der einen Fahrzeugseite gegenüber jenen der anderen Fahrzeugseite über einen vorhandenen ABS-Sensor zu erfassen. Eine andere Möglichkeit zur Erfassung der Schlingerwerte besteht darin, am Kupplungspunkt zwischen dem Zug- und dem Anhängerfahrzeug einen Querkraftsensor vorzusehen, der die quer zur Fahrtrichtung auftretenden Kräfte erfasst. Darüber hinaus ist es auch möglich, die Schlingerwerte über Abstandssensoren, die die Winkelstellung des Anhängerfahrzeugs gegenüber dem Zugfahrzeug anhand einer Abstandsmessung sensieren zu erfassen. Als Abstandssensoren können beispielsweise die im Heckbereich des Zugfahrzeugs zur Vereinfachung des Einparkens vorhandenen Abstandssensoren zur Messung des Abstands der gegenüberliegenden Anhängerfläche verwendet werden. Darüber hinaus können weitere Schlingerwerte herangezogen werden. Den Schlingerwerten gemeinsam ist, dass diese im Falle einer Schlingerbewegung des Anhängerfahrzeugs nicht konstant, sondern periodisch nach Art einer Sinusschwingung ansteigen.

Beim Ausführungsbeispiel erfolgt die Erfassung der Schlingerwerte anhand der Querbeschleunigungen des Anhängerfahrzeugs. Die Erfindung ist jedoch nicht auf eine Querbeschleunigungserfassung beschränkt, sondern kann gleichermaßen bei allen Schlingerwerten, die Aufschluss über eine Schlingerbewegung des Anhängerfahrzeugs geben, eingesetzt werden.

Die beim Ausführungsbeispiel zur Erfassung der Schlingerbewegung dienenden Elemente sind schematisch in Figur 11 dargestellt. Auf einer Platine 32 angeordnet ist ein elektronisches Sensorelement 32a, das die Querbeschleunigungen des Anhängerfahrzeuges detektiert. Darüber hinaus ist auf derselben Platine 32 eine Überwachungseinheit 32b vorgesehen, auf deren Funktionsweise nachfolgend anhand der Darstellung in Figur 12 eingegangen werden wird. Bei der Überwachungseinheit handelt es sich um eine elektronische Recheneinheit, beispielsweise einen sog. ECU.

In Figur 12 dargestellt ist der zeitliche Verlauf der Querbeschleunigung bzw. des Schlingerwerts S eines Anhängerfahrzeugs, der von dem Sensorelement 32a erfasst wurde.

Im Bereich I unterliegt die Querbeschleunigung S zunächst keinen periodischen Ausschlägen. Es sind einzelne kleine Peaks zu erkennen, die jedoch nicht auf Schlingerbewegungen hindeuten, sondern auf z.B. Straßenunebenheiten wie z.B. Spurrillen zurückführbar sind. Zum Ende des Bereichs I hin schaukeln sich die Schlingerwerte S jedoch nach Art einer sich verstärkten Sinus-Schwingung auf. Bei Erreichen des kritischen Werts S₁ am Ende des Bereichs II erhält der Elektromotor von der Überwachungseinheit 32b ein Signal zur Betätigung der Bremse, woraufhin dieser bestromt und die Stange 3 in das Gehäuse hinein bewegt wird. Mit dieser Bewegung ist jedoch nicht sofort eine Verzögerung des Anhängerfahrzeugs verbunden. Zunächst ist der Leerhub zu überwinden, wozu eine gewisse Zeitdifferenz ΔT erforderlich ist. Innerhalb dieser Zeitdifferenz ΔT kann es zu einem weiteren Aufschwingen der Beschleunigungs- bzw. Schlingeramplitude S bis auf einen oberhalb des kritischen Niveaus S₁ liegenden Wert S₃ kommen, wie dies durch die gestrichelte Kurve am Anfang des Bereichs III angedeutet ist.

Um dies zu verhindern, wird bei dem erfindungsgemäßen Zusatzbremssystem die Bremse schon unterhalb der kritischen Querbeschleunigung S₁ bei dem Schwellenwert S₂ von der Ausgangsstellung in einen Zustand der Alarmbereitschaft versetzt. In dieser Stellung ist die Stange 3 vorsorglich so weit in das Gehäuse 2 des Zusatzbremssystems 1 hinein gefahren, dass der Leerhub der Fahrzeugbremse überwunden ist, wobei jedoch noch keine merkliche Bremswirkung an der Bremse erzeugt wird. Die Bremsbeläge können dabei zwar leicht an ihrem Reibpartner schleifen, dies geschieht jedoch weitgehend kraftfrei, so dass im Zustand der Alarmbereitschaft der Bremse noch keine nennenswerte Bremsleistung anliegt und so gut wie kein Verschleiß der Bremsteile verursacht wird.

Zur Bestimmung der Größe des Leerhubs ist eine Leerhuberfassung vorgesehen. Diese besteht aus Erfassungsmitteln 4a und 4b, die den Leerhub der Fahrzeugbremse anhand der Umdrehungen der Motorwelle des Elektromotors 4 und eines Stromstärkeanstiegs der Motorstromstärke beim Anlegen der Bremsbeläge an ihren Reibpartner erfassen, vgl. Fig. 11. Die Erfassung der Motorumdrehungen erfolgt über ein Erfassungsmittel 4b, das sich zusammensetzt aus einem Drehgeber 31 und einem dessen Drehungen sensierenden Drehnehmer 32c. Der Drehgeber 31 und der Drehnehmer 32c arbeiten nach dem so genannten Hall-Effekt. Hierzu ist der Drehgeber 31 mit Magneten versehen, die sich gegenüber dem Drehnehmer 32c drehen, wodurch anhand der so genannten Hall-Spannung ein Rückschluss auf den Weg, den die Stange 3 zurückgelegt hat, möglich ist. Als Drehgeber muss nicht das an der Motorwelle 29 befestigte Element 31 dienen. Es können auch andere bei Betätigung des Getriebes sich drehende Teile als Drehgeber genutzt werden, etwa das in Fig. 9 rechts neben dem Drehgeber 31 zu erkennende, kreuzförmige Element.

Mit Hilfe der Leerhuberfassung wird der Leerhub immer auf dem aktuellen Stand gehalten, so dass der Zustand der Alarmbereitschaft immer an den aktuell vorhandenen Leerhub angepasst ist.

Nachdem die Fahrzeugbremse am Ende des Bereichs I in Alarmbereitschaft versetzt wurde, analysiert die Überwachungseinheit 32b während des Durchlaufens des Bereichs II die weitere Entwicklung der von dem Sensorelement 32a erfassten Querbeschleunigung S. Sofern die Querbeschleunigung S nun innerhalb eines vorgegebenen Zeitraums, beispielsweise 10 Sekunden, den kritischen Querbeschleunigungswert S₁, d.h. eine kritische Querbeschleunigungsfrequenz oder -amplitude, nicht erreicht, wird die Fahrzeugbremse in den Ausgangszustand zurückversetzt, d.h. die Zugstange 3 um den Leerhub der Fahrzeugbremse wieder zurückbewegt. Der Zustand der Alarmbereitschaft ist wieder beendet. Im anderen Fall, d.h. bei Erreichen der kritischen Querbeschleunigung S₁ werden die Bremsklötze der Fahrzeugbremse über das elektromotorische Betätigungselement 4 mit ihrem Reibpartner in Eingriff gebracht. Dabei steht sofort die volle Bremsleistung zur Verfügung, da es nicht erforderlich ist, zunächst den Leerhub der Fahrzeugbremse zu überwinden. Es ergeben sich sehr kurze Ansprechzeiten.

Der Vorteil dieses Verfahrens ist in Figur 12 ersichtlich. Oberhalb des kritischen Schlingerwerts S₁ ist in strichlinierter Darstellung ein Schlingerverlauf dargestellt, wie dieser bei einem herkömmlichen Zusatzbremssystem zu erwarten ist. Wenn nämlich der Elektromotor 4 bei Erreichen der kritischen Querbeschleunigung S₁ betätigt wird, vergeht noch eine gewisse Zeit ΔT, die zur Überwindung des Leerhubs der Bremse erforderlich ist. In dieser Zeit können sich die Querbeschleunigungen noch weiter bis auf einen Wert S₃ oberhalb des kritischen Niveaus S₁ verstärken, wodurch der sichere Fahrbetrieb gefährdet werden kann.

Diese Gefahren werden durch die bei dem erfindungsgemäßen Zusatzbremssystem bzw. bei dem erfindungsgemäßen Verfahren zur Betätigung von Fahrzeugbremsen über ein Zusatzbremssystem erzielten kurzen Ansprechzeiten vermieden. In Figur 12 ist anhand der durchgezogenen Linie ersichtlich, dass bei Erreichen des kritischen Werts S₁ aufgrund der dann bereits in Alarmbereitschaft befindlichen Bremse quasi sofort eine Verzögerung des Anhängerfahrzeugs und damit eine Unterdrückung der Schlingerbewegung erreicht wird.

### Bezugszeichenliste

- 1: Zusatzbremssystem
- 2: Gehäuse
- 2.1: Gehäusehälfte
- 2.2: Gehäusehälfte
- 3: Stange, Zugstange
- 4: Betätigungselement, Elektromotor
- 4a: Erfassungsmittel, Amperemeter
- 4b: Erfassungsmittel, Hall-Sensor
- 5: Gehäuseöffnung
- 8: Faltenbalg
- 9: Montagebohrungen, Bohrungen
- 10: Ring
- 11: Feder
- 12: Flansch
- 13: Seilzug
- 14: Öffnung
- 15: Hülse, Gleitlagerhülse
- 16: Gleitlager
- 17: Mutter
- 19: Tellerfeder
- 20: Anschlagfläche (hinten)
- 21: Anschlagfläche (vorne)
- 22: Zahnstange
- 23: Gleitlager
- 24: Ring
- 25: Ritzel
- 28: Ritzel
- 29: Motorwelle
- 30: Getriebe
- 30.1: Zahnrad
- 30.2: Zahnrad
- 30.3: Zahnrad
- 30.4: Zahnrad
- 30.5: Zahnrad
- 31: Drehgeber
- 32: Platine
- 32a: Sensorelement
- 32b: Überwachungseinheit
- 32c: Drehnehmer
- 50: Haltevorrichtung
- 51: Elektromagnet
- 52: Stift, Bolzen
- 53: Wippe
- 54: Achse
- 70: Positionserkennung
- 71: Tastschalter
- 72: Wippe
- 80: Zugdeichsel
- 81: Auflaufbremse, Auflaufbremseinrichtung
- 82: Kupplungseinrichtung
- 83: Zugstange
- 84: Holm
- 85: Balg
- 86: Bremsgestänge
- 87: Abdeckung
- 88: Stützrad
- 89: Kurbel
- 90: Auflaufbremsgehäuse
- 91: Montagebolzen
- 92: Gehäuse
- 93: Montageelement
- 94: Ausgleichswaage
- 94a,b: Zweig
- 95: Ausgleichswaage
- 95a,b: Zweig
- 96: Ausgleichswaage
- 96a,b: Zweig

- S: Schlingerwert, Querbeschleunigung
- S₁: kritischer Schlingerwert, kritische Querbeschleunigung
- S₂: Schwellenwert
- ΔT: Zeitdifferenz, Ansprechzeit

- I: Ausgangszustand
- II: Alarmbereitschaft
- III: Bremsbetätigung

## Patentansprüche

1. Zusatzbremssystem für gebremste, insbesondere auflaufgebremste Anhängerfahrzeuge mit einem die Anhängerbremse betätigenden Element (4), einem einen Schlingerwert (S) des Anhängers aufnehmenden Sensorelement (32a) und einer Überwachungseinheit (32b), über die das Betätigungselement (4) bei Erreichen eines kritischen Schlingerwerts (S₁) zur Betätigung der Anhängersbremse veranlasst wird,
**dadurch gekennzeichnet,**
**dass** bei Erreichen einer unterhalb des kritischen Schlingerwerts (S₁) liegenden Schwelle (S₂) des Schlingerwerts die Anhängerbremse dadurch in Alarmbereitschaft versetzbar ist,
**dass** der Leerhub der Anhängerbremse überwunden wird.

2. Zusatzbremssystem nach Anspruch 1, **dadurch gekennzeichnet, dass** das Betätigungselement (4) ein Elektromotor ist.

3. Zusatzbremssystem nach Anspruch 1 und/oder Anspruch 2, **dadurch gekennzeichnet,**
**dass** die Überwachungseinheit (32b) nach Überwindung des Leerhubs in Abhängigkeit des Schlingerwerts (S) entscheidet, ob die Anhängerbremse betätigt oder in ihre Ausgangsstellung zurückversetzt wird.

4. Zusatzbremssystem nach Anspruch 3, **dadurch gekennzeichnet, dass** die Entscheidung anhand der Frequenz und/oder Amplitude des Schlingerwerts (S) innerhalb eines Entscheidungszeitraums (T) getroffen wird.

5. Zusatzbremssystem nach einem oder mehreren der Ansprüche 1 bis 4, **dadurch gekennzeichnet, dass** das Sensorelement (32a) innerhalb eines Gehäuses (2) des Zusatzbremssystems angebracht ist.

6. Zusatzbremssystem nach einem oder mehreren der Ansprüche 1 bis 4, **dadurch gekennzeichnet, dass** das Sensorelement (32a) außerhalb eines Gehäuses (2) des Zusatzbremssystems nahe der Fahrzeugachse angebracht ist.

7. Verfahren zur Betätigung von Anhängerbremsen über ein Zusatzbremssystem (1), bei dem die Schlingerwerte (S) des Anhängers überwacht werden und die Fahrzeugbremse bei Erreichen eines kritischen Schlingerwerts (S₁) betätigt wird,
**dadurch gekennzeichnet,**
**dass** die Anhängerbremse vor Erreichen des kritischen Schlingerwerts (S₁) dadurch in Alarmbereitschaft versetzt wird, dass der Leerhub der Anhängerbremse überwunden wird.

8. Verfahren nach Anspruch 7, **dadurch gekennzeichnet, dass** die Anhängerbremse bei Erreichen einer Schwelle (S₂) des Schlingerwerts in Alarmbereitschaft gebracht wird.

9. Verfahren nach einem der Ansprüche 7 und/oder 8, **dadurch gekennzeichnet, dass** die in Alarmbereitschaft versetzte Anhängerbremse in ihren Ausgangszustand zurückversetzt wird, sofern der kritische Schlingerwert (S₁) nicht erreicht wird.

## Claims

1. An additional braking system for braked trailer vehicles, in particular with an over-run brake, with an element (4) actuating the trailer brake, a sensor element (32a) receiving a snaking value (S) of the trailer, and a monitoring unit (32b) by way of which the actuating element (4) is caused to actuate the trailer brake when a critical snaking value (S₁) is reached, **characterized in that** when a threshold (S₂) of the snaking value below the critical snaking value (S₁) is reached the trailer brake is capable of being put onto alert as a result of the idle stroke of the trailer brake being overcome.

2. An additional braking system according to claim 1, **characterized in that** the actuating element (4) is an electric motor.

3. An additional braking system according to claim 1 and/or claim 2, **characterized in that** after the idle stroke has been overcome the monitoring unit (32b) decides in a manner dependent upon the snaking value (S) whether the trailer brake will be actuated or set back to the starting position thereof.

4. An additional braking system according to claim 4, **characterized in that** the decision is made with reference to the frequency and/or the amplitude of the snaking value (S) within a decision period (T).

5. An additional braking system according to one or more of claims 1 to 4, **characterized in that** the sensor element (32a) is attached inside a housing (2) of the additional braking system.

6. An additional braking system according to one or more of claims 1 to 4, **characterized in that** the sensor element (32a) is attached in the vicinity of the vehicle axle outside a housing (2) of the additional braking system.

7. A method of actuating trailer brakes by way of an additional braking system (1), in which the snaking values (S) of the trailer are monitored and the vehicle brake is actuated when a critical snaking value (S₁) is reached, **characterized in that** before the critical snaking value (S₁) is reached the trailer brake is put onto alert as a result of the idle stroke of the trailer brake being overcome.

8. A method according to claim 7, **characterized in that** the trailer brake is put onto alert when a threshold (S₂) of the snaking value is reached.

9. A method according to one of claims 7 and/or 8, **characterized in that** the trailer brake put onto alert is set back to the starting state thereof if the critical snaking value (S₁) is not reached.

## Revendications

1. Système de freinage supplémentaire pour des véhicules remorques freinés, en particulier des véhicules remorques freinés au niveau de la poussée, comprenant un élément (4) actionnant le frein de remorque, un élément capteur (32a) enregistrant une valeur de roulis (S) de la remorque et une unité de contrôle (32b) par laquelle l'élément d'actionnement (4) reçoit l'ordre d'actionner le frein de remorque lorsqu'une valeur de roulis (S₁) critique est atteinte,
**caractérisé en ce que,**
lorsqu'un seuil (S₂) situé autour de la valeur de roulis (S₁) critique, de la valeur de roulis est atteint, le frein de remorque peut être placé en alerte du fait que la course à vide du frein de remorque est maîtrisée.

2. Système de freinage supplémentaire selon la revendication 1, **caractérisé en ce que** l'élément d'actionnement (4) est un moteur électrique.

3. Système de freinage supplémentaire selon la revendication 1 et/ou la revendication 2, **caractérisé en ce que** l'unité de contrôle (32b) décide si, après avoir surmonté la course à vide et en fonction de la valeur de roulis (S), le frein de remorque est actionné ou est reculé dans sa position de départ.

4. Système de freinage supplémentaire selon la revendication 3, **caractérisé en ce que** la décision est prise à l'aide de la fréquence et/ou de l'amplitude de la valeur de roulis (S) à l'intérieur d'une période de décision (T).

5. Système de freinage supplémentaire selon l'une quelconque ou plusieurs des revendications 1 à 4, **caractérisé en ce que** l'élément capteur (32a) est placé à l'intérieur d'un boîtier (2) du système de freinage supplémentaire.

6. Système de freinage supplémentaire selon l'une quelconque ou plusieurs des revendications 1 à 4, **caractérisé en ce que** l'élément capteur (32a) est placé à l'extérieur d'un boîtier (2) du système de freinage supplémentaire à proximité de l'axe du véhicule.

7. Procédé pour actionner des freins de remorque au moyen d'un système de freinage supplémentaire (1), dans lequel les valeurs de roulis (S) de la remorque sont contrôlées et le frein de véhicule est actionné lorsqu'une valeur de roulis (S₁) critique est atteinte,
**caractérisé en ce que**
le frein de remorque est placé en alerte, lorsque la valeur de roulis (S₁) critique est atteinte, du fait que la course à vide du frein de remorque est surmontée.

8. Procédé selon la revendication 7, **caractérisé en ce que** le frein de remorque est placé en alerte lorsqu'un seuil (S₂) de la valeur de roulis est atteint.

9. Procédé selon l'une quelconque des revendications 7 et/ou 8, **caractérisé en ce que** le frein de remorque placé en alerte est reculé dans son état initial dans la mesure où la valeur de roulis (S₁) critique n'est pas atteinte.
